# EUROPEAN PATENT APPLICATION

(11) **EP 3 992 829 A1**
(43) Date of publication of application: **04.05.2022**
(21) Application number: 20306305.2
(22) Date of filing: 30.10.2020
(51) Int. Cl.: G06F 21/64, H04L 9/32

(54) **INFRASTRUCTURE-ENABLED SECURE LEDGER**

(71) Applicant: Hewlett-Packard Development Company, L.P., Spring TX 77389 (US)
(72) Inventor: Balinsky, Helen, Bristol, Bristol BS1 6NP (GB); Daney De Marcillac, Patrick Jacques Andre Marie, 38053 Grenoble Isere (FR); Bouraoui, Samir, 38053 Grenoble Isere (FR)
(74) Representative: Bryers LLP

(57) **Abstract**

A method and system for certifying an interaction of an infrastructure component with a device in the course of the device lifecycle are described. The method comprises accessing device identification data that identifies the device, generating validation data on the basis of device identification data and component identification data to certify an interaction of the device with the infrastructure component and communicating a request to store the validation data in a secure ledger. The secure ledger comprises a ledger entry for each interaction of the device with an infrastructure component.

## Description

### BACKGROUND

Throughout the course of its lifecycle an electronic device will pass through a complex infrastructure involving a large number of parties. A device may be built in one country and shipped to the end-user through one or more couriers and suppliers. The infrastructure for handling a device as it passes through each stage of the device lifecycle is also operated and controlled by multiple separate parties. The task of device lifecycle management is supported by paper trails and audit logging as the device passes through each stage on its way to the end-consumer or another stage of its lifecycle.

### BRIEF DESCRIPTION OF THE DRAWINGS

Figure 1 is a schematic diagram showing an apparatus for recording data to a secure ledger, according to an example.
Figure 2 is a schematic diagram showing a device lifecycle according to an example.
Figure 3 is a block diagram showing a method for certifying an interaction of an infrastructure component with a device, according to an example.
Figure 4 is a block diagram of a method for recording data to a secure ledger, according to an example.
Figure 5 is a schematic diagram showing a processor and memory, according to an example.

### DETAILED DESCRIPTION

In the following description, for purposes of explanation, numerous specific details of certain examples are set forth. Reference in the specification to "an example" or similar language means that a particular feature, structure, or characteristic described in connection with the example is included in at least that one example, but not necessarily in other examples.

Presently, the infrastructure for handling a device as it passes through each stage of the device lifecycle is operated and controlled by multiple separate parties. Processes for tracking the stages of a device lifecycle are often manual processes that are prone to human error. These processes may involve complex paper trails where records of transactions are printed, hand-written and scanned before being confirmed between the relevant parties. Such processes are costly and frustrating for providers and the customers they serve.

Furthermore, dispute resolution in systems reliant on these processes can be very time consuming and costly. The likelihood of disputes also increases when transactions are recorded and paid for in paperwork in multi-lingual and multi-currency environments. The increased lack of precision in asset management may also lead to a loss of inventory.

In some cases, a party provides their own reference system which other parties may connect to and utilize. Unfortunately establishing such a reference system is also a complex procedure. This is because the device lifecycle may involve multiple entities. Such a reference system relies on the co-operation between the other parties to agree and establish connections and reconciliation processes. This may be a highly complex task that requires parties to integrate their IT infrastructures. Once a customer has been through such an integration process with a vendor, the customer becomes tied to the vendor. This is unattractive to customers who may desire the choice and flexibility to change vendors based on changing business needs or market conditions.

In recent years, secure ledger or "blockchain" technology has become prevalent. Secure ledgers are deployed in a range of contexts to provide guarantees that certain processes have properly been executed and that tasks have been carried out according to a well-defined process.

A secure ledger may be implemented as follows, between blockchain clients and a blockchain service: the previous entry in the ledger is hashed using a secure cryptographic hash function and is used as an input to the next block in the ledger. Further data may be input into the next block such as a record that a transaction has taken place. Transactions are digitally signed by the party creating a transaction and the digital signature is automatically verified, when the transaction is received by the blockchain service and prior adding it to the ledger. Digitally signed transactions are included this way into the ledger and the signature may be validated again at any later time, providing assurance about the origin and integrity/authenticity of each individual record in the ledger. The secure ledger is secure-by-design in that the integrity of any point of the ledger can be verified by recomputing hash values on inputs and checking the recomputed hash values against the ledger.

Secure ledgers may be stored in a decentralized fashion across multiple nodes. For example, the ledger may be stored across a peer-to-peer network where nodes hold their own copy of the ledger. In that case, the verification of a transaction may occur by recomputing values at nodes and reaching a consensus.

Using secure ledgers, it is possible to execute whole protocols and maintain a verifiable record of each step of the protocol. For example, "smart contracts" allow the digital facilitation, verification and/or enforcement of the negotiation or performance of a contract. Smart contracts allow the performance of credible transactions without third parties such as legal entities being involved.

Ledger technology digitizes and simplifies many processes which would previously have involved trusted third-party verification to perform securely. Secure ledgers provide a higher degree of certainty for participants and provide greater security over trusted third-party models.

In the context of device lifecycle management, a secure ledger may be used to construct a verifiable record of events that have occurred in the device lifecycle. The methods and systems described herein provide an automated system using a secure ledger to record transactions between vendors and customers throughout the device lifecycle.

A blockchain client or program is installed on an infrastructure component or a device. The client is activated when the device interacts with the infrastructure component or an event occurs on the device during a stage of the device lifecycle. On activation the client creates a payload with an identifier of the device and other important information related to the event. The client certifies and transmits the payload to a remote server that stores the record of the interaction or event in a secure ledger.

The infrastructure component may be, for example, a secure locker that belongs to an enterprise. When a customer such as an individual or an organisation, purchases a device, the device may be placed in the secure locker where an end-user customer collects the device using an access credential provided by the enterprise. According to examples, a secure ledger client runs in the firmware of the secure locker. When the device is placed in the locker for delivery to the customer, the secure ledger client records the presence of the device by recording a unique device identifier associated to the device. In some cases, the record may comprise data identifying who and when the device was placed in the secure locker. The secure ledger client generates a Certificate of Delivery (CoD) and uploads the certificate to the secure ledger with the device identifier.

In some cases, the device itself may also be powered on and connected to a local area network when placed in the secure locker. When the customer receives the device, the device-based client may generate a certificate that confirms the device has been accepted by the client (CoA). The device-based client sends the CoA certificate to the secure ledger. Once the device has been switched on and accessed by the customer, the client may record data to the secure ledger on an on-going basis as a Certificate of Usage (CoU).

After a period of time the device may experience a fault or malfunction in which case the user may seek to have the device repaired. In some cases, the device is refurbished and passed to a new user.

At the end of the device lifecycle a secure ledger client running in the infrastructure of a participating recycling line may write further data to the secure ledger confirming that the device has been recycled. Secure ledger data may be used to automatically trigger invoices based on terms agreed between various vendors involved in the manufacturing, delivering, customising, servicing and recycling of devices throughout the device lifecycle.

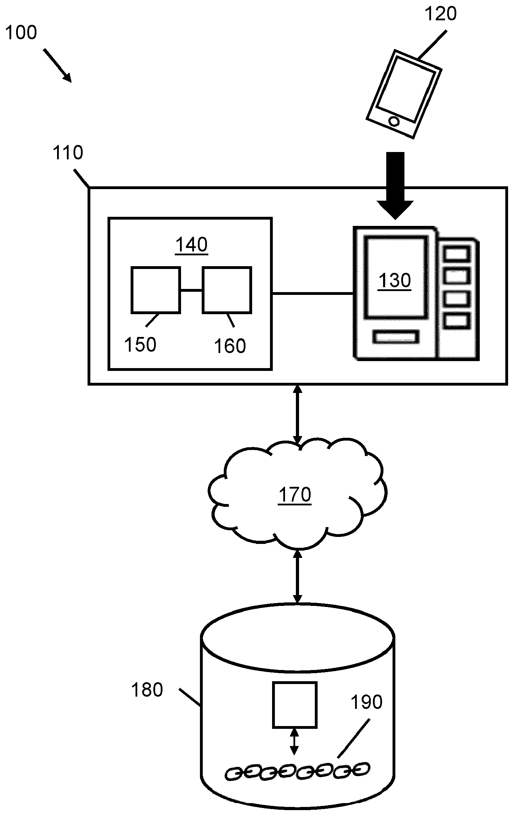

Figure 1 is a simplified schematic diagram 100 showing an apparatus 110 for recording data to a secure ledger, according to an example. The apparatus 110 may be implemented within infrastructure of an entity that interacts with a device 120 during the device lifecycle. The device 120 may be any electronic device such as a consumer electronics device or any part containing an electronic identification recognizable by the infrastructure or any part having a unique feature recognizable by the infrastructure (i.e. digital footprint) or similar. In some cases, the electronic identification may comprise a manufacturer's product number, serial number and/or the devices public key or public key certificate. The device lifecycle may comprise the period of time from the ordering of the device or the initial manufacture of the device 120 to the manufacturing, customization, delivery, maintenance, refurbishment, disposal or recycling of the device 120. An occurrence of an event in the device lifecycle may refer to a point in time in which an event occurs in the device lifecycle. This may be an event on the device 120 such as the first time the device 120 is switched on. Alternatively, an event may be an external event in which the device 120 participates, such as the delivery of the device 120 from a courier to a customer.

The apparatus 110 comprises an infrastructure component 130 that interacts with the device 120. The infrastructure component 130 may be, for example, a secure locker in which the device is deposited when it is delivered to a customer, or where a user deposits the device for storage when they are not using the device or when the device is to be or is being serviced. In another example, the infrastructure component 130 may be part of a production line on the manufacturing floor of a device manufacturer. In another example, the infrastructure component 130 may be a reader with a scanner to read a barcode, Quick Response (QR), Radio-frequency identification (RFID), Bluetooth Low Energy (BLE) code or similar on the device, or a box containing the device, or a camera able to capture a digital feature of the object (i.e. read a footprint).

The infrastructure component 130 is communicatively coupled to a validation module 140. In Figure 1 the validation module 140 comprises a processor 150 and a memory 160. The memory 160 may be a read-only memory. In other cases, the validation module 140 may be integrated in the infrastructure component 140. For example, the validation module 140 may be implemented in the firmware of the infrastructure component 130.

In examples, the validation module 140 may be implemented at a level below, or separate from an operating system that controls the infrastructure component 130. For example, in one case, the validation module 140 is implemented as instructions in software in the Basic Input/Output System (BIOS) of the infrastructure component 130. In another case, the validation module may be implemented in a dedicated component. In this manner the validation module 140 may be logically separated from or inaccessible to the operating system that controls the infrastructure component 130.

The apparatus 110 is in communication with a network 170. According to examples, the network 170 may be a wide area network such as the internet or a local area network (LAN). The network may be a mobile communications network or similar. In some cases, the connection of the apparatus 110 to the network 170 is a permanent connection. In other cases, the connection of the apparatus 110 to the network 170 may be intermittent. In that case, the validation module 140 may be arranged to determine when a connection is available and to communicate with other entities on the network 170 on the basis of the determination.

In Figure 1, the apparatus 110 communicates with a remote server 180 across the network 170. The remote server 180 provides access to a secure ledger 190. The secure ledger 190 comprises trackable and auditable records of interactions of the device 120 with infrastructure components such as the infrastructure component 130. This may include a record of the creation of the device 120, and all subsequent events which are recorded to the secure ledger 190 in the device lifecycle.

According to examples the secure ledger 190 may be implemented as a blockchain or a hash chain. Data that is stored in the secure ledger 190 is determined on the basis of previous data written to the ledger and further input data received from the apparatus 110. Subsequent ledger entries may be computed using, for example, a secure cryptographic hash function. This creates a secure and immutable record of ledger entries.

According to examples described herein, the memory 160 of the validation module 140 comprises instructions to implement a secure ledger client. The client may be activated when the device 120 is detected as interacting with the infrastructure component 130. For example, if the infrastructure component 130 is a secure locker, the client may be activated when the device 120 is placed in the secure locker.

The validation module 140 is arranged to receive device identification data that identifies the device 120. On activation the client creates a payload with the device identification data and infrastructure identification data that identifies the infrastructure component 130. The payload also comprises attestation data that validates a record of an interaction of the infrastructure component 130 with the device 120. According to examples, the attestation data may comprise a certificate. In examples, the attestation data comprises a secure ledger certified transaction, signed by the infrastructure component 130, the device 120 or by both parties. The certificate may be a cryptographically secure certificate that is generated by digitally signing the record of the interaction and the device and/or infrastructure identification data, using a private key of the validation module 140. In some cases, the device 120 may also be arranged to sign device identification data, the attestation data or another component of a payload.

The client transmits the payload from the apparatus 110 to the remote server 180 via the network 170 when a connection becomes available. The remote server 180 receives a request to record the payload to the secure ledger 190. The remote server 180 verifies the attestation data. The remote server 180 adds the attestation data to the secure ledger 190 to form a new ledger entry if the attestation data is valid. According to examples, generating a new entry to the secure ledger 190 comprises computing a hash value by evaluating a hash function on the basis of the payload and previous entries on the secure ledger 190.

In some cases, the apparatus 110 may have intermittent access to a connection to the network 170. The client may repeatedly attempt to communicate the payload to the remote server 180 until a confirmation of success is received. In some cases, the client may also cause the apparatus 110 to restrict usage of the infrastructure component 130 after a number of failed attempts to communicate with the remote server 180 or after an amount of time has elapsed without receiving confirmation that the payload has been received.

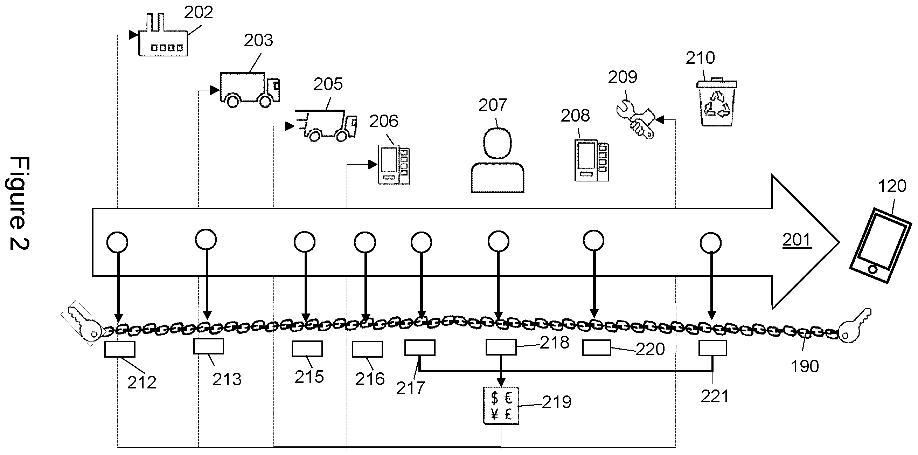

Figure 2 is a simplified schematic diagram showing a device lifecycle 200 for the device 120, according to an example. In Figure 2, different entities that interact with the device 120 are shown. The entities include a device manufacturer 202, a long-haul international delivery partner 203, a local logistic delivery partner 205, an enterprise customer 206, an end-user customer 207, a secure locker 208, a repairer 209 and a recycler 210.

An apparatus similar to the apparatus 110 shown in Figure 1 may be implemented in an infrastructure component associated to the entity that the device 120 interacts with. The interactions are represented as points on the arrow 201 device lifecycle 200. For example, the point 211 may represent the inception of the device 120 during its manufacture.

At each stage of the device lifecycle 120, an infrastructure component similar to infrastructure component 130 may detect, read or register a device identifier that is unique to the device 120. An apparatus similar to the apparatus 110 automatically records the interaction of the device 120 with the infrastructure component to the secure ledger 190 in the manner described in relation to apparatus 110.

For example, an apparatus on the production line of the manufacturer 202 may post a payload 212 comprising a Certificate of Build (CoB) to the remote server 180 to be validate and recorded in the secure ledger 190. The international delivery partner 203 may record a payload 213 comprising a Certificate of Delivery (CoD) when the device 120 is shipped to an importer. The importer may record data when the device 120 is passed to the local delivery partner 205. The local delivery partner 205 may also send data 215 to the secure ledge 190 when the device 120 is received and/or delivered to the enterprise customer 206.

The enterprise customer 206 may receive the device 120 and store the device 120 in a smart locker enclosure on its premises. In some cases, the smart locker may contain a controlling device (not shown in Figure 2) having a pre-installed secure ledger client similar to that described in relation to the apparatus 110. This client may automatically post a transaction request to record a transaction as a CoD to the secure ledger 190 for each device which is received in the secure locker.

According to examples, the secure locker may also comprise a triggering mechanism which powers up the device 120 when it is placed in the secure locker. According to examples, for a new device, this may cause the device to execute its so-called out of box experience which will trigger the secured instructions set by the manufacturer 202. In examples, this may cause a secure ledger client executing on the device 120 to post to the secure ledger 190. For example, the client on the device may generate and send a Certificate of Acceptance 217 to the secure ledger 190. A Certificate of Usage 218 and certificates for other events, such as firmware upgrades performed, device provisioning and software installation may be posted on an ongoing basis.

These secure ledger records, when added may be used to automatically trigger invoices, based on terms agreed between various vendors involved in the manufacturing, servicing and recycling of devices throughout the device lifecycle. A module 219 may be provided to trigger cascaded financial actions based on the various certificates. For example, payments may be completed from the manufacturer 202 to long haul deliverer 203, from the manufacturer 202 to the local delivery partner 205, to importer 204 to manufacturer 202. Payments may be outside of the secure ledger, triggered by particular actions or added as records to the ledger in the form of tokens, or other redeemable vouchers.

In the case of a hardware failure that prevents the device 120 performing any communication with an infrastructure component, a Failure ID may be written into a black box running on the device 120. Another device or infrastructure component 208 equipped with a Radio-frequency identification (RFID) reader like a phone, locker or kiosk may read that FID and register a corresponding Certificate of Failure (CoF) on behalf of the device into the secure ledger. Based on the failure type a device may be considered dead on arrival (DOA) and a replacement device may be automatically shipped in time for customer to pick it up as planned. The system may automatically prompt an agent to collect the DOA unit and repair it off-line. Based on other failure code, the issue may be remotely fixed and once repaired, the fully functional device may send a transaction request to the secure ledger 190 which is recorded as a certificate of repair 221 to the secure ledger 190. This may trigger a further invoice.

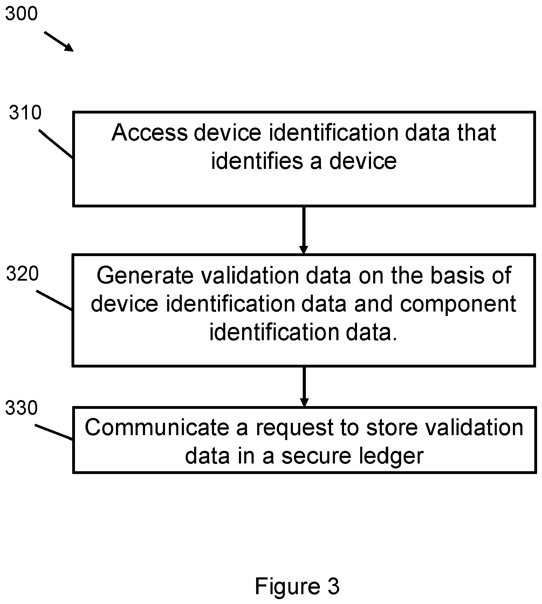

Figure 3 is a block diagram showing a method 300 method for certifying an interaction of an infrastructure component with a device in the course of the device lifecycle. The method 300 may be used in conjunction with the apparatus, methods and examples described herein. In particular, the method 300 may be implemented on the apparatus 110 shown in Figure 1.

At block 310, the method 300 comprises accessing device identification data that identifies a device. The device may be any electronic device such as the device 120 shown in Figures 1 and 2. The device identification data may be an identifier that is unique to the device such as a serial number. In examples, accessing the device identification data comprises scanning a machine-readable code associated to the device. The machine-readable code may be a barcode, a QR code, Radio-frequency identification (RFID) tag, a Bluetooth Low Energy (BLE) code or similar or detecting a digital unique footprint.

At block 320, the method comprises generating validation data on the basis of device identification data and component identification data. The validation data certifies an interaction of the device with an infrastructure component. The block 320 may be implemented by the validation module 140 shown in Figure 1. According to examples, the validation data comprises a cryptographically secure digital signature generated using a private signing key belonging to the infrastructure component or entity that owns the infrastructure component. In some cases, the validation data may also be signed by the device.

In some cases, generating validation data comprises the infrastructure component interacting with the device to co-operatively generate the validation data. In some cases, co-operatively generating validation data comprises a client on the device generating first validation data, and a client on the infrastructure component generating second validation data that is combined with the first validation data by either the device, the infrastructure component or another entity. Depending on the use case, a client on the device or a client on the infrastructure can create the first validation data. The second validation data may be complementary or derived from the first validation data.

At block 330 the method 300 comprises communicating a request to store validation data in a secure ledger. The secure ledger comprises a ledger entry for each interaction of the device with an infrastructure component. In examples, communicating the request to store the validation data comprises transmitting a signed transaction request to a remote server. The remote server validates the request, and if valid, adds a record of the transaction to the secure ledger. The payload may comprise the validation data and identifiers of the infrastructure component and the device.

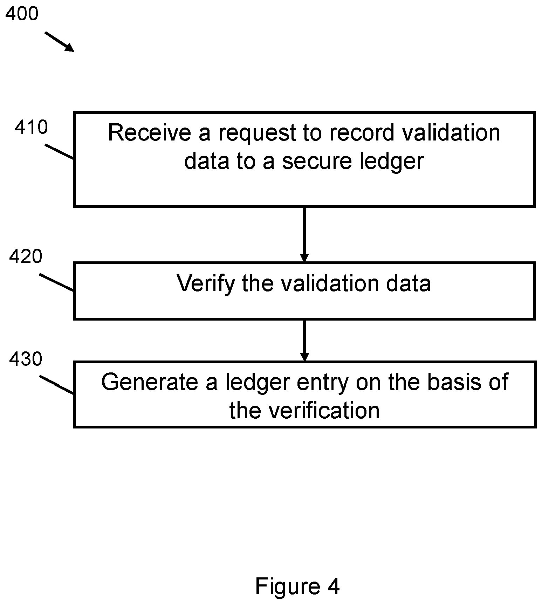

Figure 4 is a schematic diagram of a method 400, according to an example. The method 400 may be used in conjunction with the apparatus, methods and examples described herein. In particular, the method 400 may be implemented on the remote server 180 shown in Figure 1.

At block 410 the method 400 comprises receiving a request to record validation data to a secure ledger, the validation data certifying an interaction of a device with an infrastructure component during the device lifecycle. The secure ledger comprises a ledger entry for interactions of infrastructure components with a device, where each ledger entry is digitally signed by the corresponding infrastructure component and/or the device.

At block 420, the method 400 comprises verifying the validation data received with the request. In examples, verifying the validation data comprises determining that the interaction certified by the validation data corresponds to an interaction that is permitted according to a rule based on the secure ledger entries, for example, as enforced by a smart contract.

For example, the remote server 180 may determine whether validation data for an interaction of the device 120 with an infrastructure component is valid on the basis of a timestamp. A rule may be implemented to determine whether a subsequent entry corresponds to an interaction with a timestamp that is later than a timestamp of the previous interaction recorded in the ledger. For example, in the context of Figure 2, it may be the case that the remote server 180 receives validation data for an interaction of the device 120 with the delivery partner 203 subsequent to having already received validation data for an interaction that the device 120 has been received by the end-user 207. In that case, the remote server may reject the validation data for that interaction. In yet another embodiment, a transaction certifying that the device 120 has been received by the end-user 207 might be rejected in absence of the expected record by the delivery partner 203. In yet another embodiment a transaction certifying that the device 120 has been received by the end-user 207 might still be accepted in absence of the expected record by the delivery partner 203, however 207 informed that the provenance of the device is incomplete and its provenance (custody) cannot be fully guaranteed.

At block 430 the method 400 comprises generating a ledger entry on the basis of the verification. In some cases, generating the ledger entry on the basis of the verification comprises generating the ledger entry as a function of previous ledger entries and the validation data. For example, the ledger entry may be determined from the evaluation of secure cryptographic hash function on inputs comprising the most recent previous ledger entry, the validation data received with the request and identification data of the infrastructure component and the device.

According to examples the method 400 may further comprise receiving a request to execute a transaction upon completion of the interaction, determining a status of the interaction on the basis of the secure ledger entries and executing the transaction on the basis of the determination. The transaction may be a cash payment from a customer to a vendor, or similar.

The method and systems described herein provide an efficient, auditable and robust system for device lifecycle management. The methods and systems provide tracking of a device throughout the device lifecycle regardless of ownership of the device or ownership of the various participating infrastructure components. The system described herein may autonomously execute contracts on behalf of vendors and customers that previously would have relied on complex paper trails. Such methods are prone to human error. The present method avoids these problems through the use of a secure ledger.

The methods and systems described herein may capture a rich set of device-related-statuses or assertions throughout the course of the device lifecycle. This may be used to augment record data with more contextual information in the form of certificates. This provides a cleaner system for supply chain management and automatic back to back cascaded payments where the same signal may be used to settle payments between multiple parties.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine-readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode.

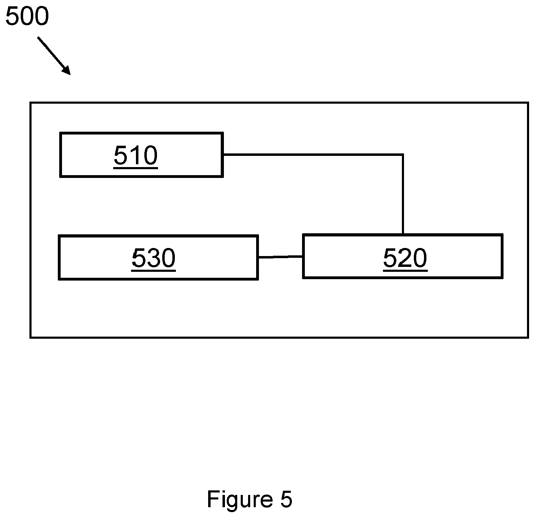

For example, the instructions may be provided on a non-transitory computer readable storage medium encoded with instructions, executable by a processor. Figure 5 shows an example of a processor 510 associated with a memory 520. The memory 520 comprises computer readable instructions 530 which are executable by the processor 510.

The instructions 530 cause the processor to receive an identifier for a device, determine validation data validating a record of an interaction of an infrastructure component with the device and send a request to a remote server to store the validation data in a secure ledger, wherein the secure ledger comprises ledger entry data for each certified interaction of the device with an infrastructure component.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the present disclosure. In particular, a feature or block from one example may be combined with or substituted by a feature/block of another example.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A method for certifying an interaction of an infrastructure component with a device in the course of the device lifecycle, the method comprising:
accessing device identification data that identifies the device;
generating validation data on the basis of device identification data and component identification data to certify an interaction of the device with the infrastructure component; and
communicating a request to store the validation data in a secure ledger;
wherein the secure ledger comprises a ledger entry for each certified interaction of the device with an infrastructure component.

2. The method of claim 1, wherein the validation data comprises a cryptographically secure signature.

3. The method of claim 1, wherein the infrastructure component comprises a secure container.

4. The method of claim 3, wherein the interaction of the device with the infrastructure component comprises storing the device in the secure container.

5. The method of claim 4, wherein the secure container interacts with the device to co-operatively generate the validation data.

6. The method of claim 1, wherein communicating the request to store the validation data comprises transmitting a signed payload to a remote server, validating the signed payload and storing in the secure ledger.

7. The method of claim 1, wherein accessing the device identification data comprises scanning a machine-readable code associated to the device.

8. The method of claim 1, wherein accessing the device identification data comprises accessing cryptographic data associated to the device.

9. A method, comprising:
receiving a request to record validation data to a secure ledger, the validation data certifying an interaction of a device with an infrastructure component during the device lifecycle;
verifying the validation data; and
generating a ledger entry on the basis of the verification,
wherein the secure ledger comprises a ledger entry for each certified interaction of the device with an infrastructure component.

10. The method of claim 9, wherein verifying the validation data comprises determining that the interaction certified by the validation data corresponds to an interaction that is permitted according to a rule based on the secure ledger entries.

11. The method of claim 9, wherein generating the ledger entry on the basis of the verification comprises appending the ledger entry to the secure ledger.

12. The method of claim 9, comprising:
receiving a request to execute a transaction upon completion of the interaction;
determining a status of the interaction on the basis of the secure ledger entries; and
executing the transaction on the basis of the determination.

13. An apparatus, comprising:
an infrastructure component; and
a validation module communicatively coupled to the infrastructure component, the validation module to:
receive identification data for a device;
generate attestation data validating a record of an interaction of the infrastructure component with the device; and
transmit a request from the apparatus to a remote server to store the attestation data in a secure ledger;
wherein the secure ledger comprises a ledger entry for each certified interaction of the device with an infrastructure component.

14. The apparatus of claim 13, wherein the infrastructure component is a secure locker.

15. A non-transitory computer readable medium encoded with instructions executable by a processor to:
receive an identifier for a device;
determine validation data validating a record of an interaction of an infrastructure component with the device; and
send a request to a remote server to store the validation data in a secure ledger;
wherein the secure ledger comprises ledger entry data for each certified interaction of the device with an infrastructure component.
